# EUROPÄISCHE PATENTSCHRIFT

(11) **EP 1 914 564 B1**
(45) Veröffentlichungstag und Bekanntmachung des Hinweises auf die Patenterteilung: **23.06.2010**
(21) Anmeldenummer: 06021980.5
(22) Anmeldetag: 19.10.2006
(51) Int. Cl.: G01S 7/497, G01S 17/42, G01S 17/93, G02B 26/10, G02B 27/64, G01C 9/20

(54) **Optische Erfassungseinrichtung**
Optical detection device
Dispositif de détection optique

(43) Veröffentlichungstag der Anmeldung: 23.04.2008
(73) Patentinhaber: SICK AG, 79183 Waldkirch (DE)
(72) Erfinder: Mack, Stefan, Dr., 79108 Freiburg (DE)
(74) Vertreter: Manitz, Finsterwald & Partner GbR

(56) Entgegenhaltungen:
- EP-A- 1 130 416
- EP-A1- 0 626 561
- EP-A2- 0 989 387
- DE-A1- 4 222 409
- JP-A- 8 166 212
- US-A- 3 961 179
- US-B1- 6 253 457
- US-B1- 6 389 785

## Beschreibung

Die Erfindung betrifft eine optische Erfassungseinrichtung, insbesondere einen Laserscanner, mit wenigstens einem Sender zur Aussendung elektromagnetischer Strahlung in einen Überwachungsbereich sowie zumindest einem Empfänger für im Überwachungsbereich reflektierte Strahlung. Die Erfindung betrifft außerdem ein Verfahren zum Korrigieren der Richtung der ausgesandten Strahlung einer derartigen optischen Erfassungseinrichtung.

Bei derartigen Erfassungseinrichtungen kommt der Ausrichtung der in den Überwachungsbereich ausgesandten Strahlung entweder relativ zur Erfassungseinrichtung selbst oder in einem bezüglich des Raumes festen Bezugssystem eine immer größere Bedeutung zu. Diese Thematik ist dabei prinzipiell unabhängig davon, ob die Strahlung lediglich in eine einzige Richtung ausgesandt wird oder ein scannendes System vorhanden ist, bei dem die ausgesandte Strahlung in einer Abtastebene abgelenkt wird. Im ersten Fall geht es um die Ausrichtung eines einzigen Abtaststrahles, während im zweiten Fall die Abtastebene auszurichten ist. Bezüglich der Abtastebene wird nachstehend anstelle des Begriffs "Richtung" auch der Begriff "Orientierung" oder "Lage" verwendet. Eine streng mathematisch korrekte Definition der Orientierung oder Lage der Abtastebene im Raum- z.B. durch Einführen des Normalenvektors der Abtastebene - ist hier nicht erforderlich und soll aus Gründen der Einfachheit unterbleiben.

Vor allem scannende Systeme werden zunehmend an so genannten autonomen Fahrzeugen eingesetzt. Die fest mit dem Fahrzeug verbundene Erfassungseinrichtung dient dazu, Hindernisse zu erkennen, um erforderlichenfalls geeignete Maßnahmen einleiten zu können. In vielen praktischen Anwendungen soll die Abtastebene so ausgerichtet werden, dass sie parallel zu einem ebenen Untergrund verläuft, auf welchem sich das Fahrzeug fortbewegt. Problematisch hierbei ist, dass bei Bodenunebenheiten die Abtastebene zusammen mit dem Fahrzeug und der Erfassungseinrichtung relativ zu einem raumfesten Bezugssystem verkippt und Hindernisse, die ohne die daraus resultierende Richtungsänderung der Abtastebene von dieser erfasst worden wären, nicht mehr erkannt werden, da die Abtastebene entweder "auf den Boden" oder "in den Himmel blickt". Dabei kann es insbesondere vorkommen, dass der Boden fälschlicherweise als Hindernis gewertet oder ein "echtes" Hindernis von relativ geringer Höhe sich unterhalb der "in den Himmel blickenden" Abtastebene befindet.

Vor dem Hintergrund dieser Problematik ist es somit grundsätzlich erstrebenswert, die Ausrichtung der Abtastebene relativ zum Fahrzeug verändern zu können.

Die Ausrichtung eines Abtaststrahles oder einer Abtastebene kann darüber hinaus auch für stationäre Anwendungen von Vorteil sein, wenn sich beispielsweise die Halterung der Erfassungseinrichtung verstellt oder eine abgenommene Erfassungseinrichtung erneut an der Halterung angebracht werden soll. In der Praxis wird ein erheblicher Aufwand betrieben, um den Abtaststrahl oder die Abtastebene mit der erforderlichen hohen Genauigkeit relativ zu der Halterung der Erfassungseinrichtung auszurichten.

Eine Richtungsänderung der ausgesandten Strahlung relativ zur Erfassungseinrichtung selbst oder zu einem fest mit der Erfassungseinrichtung verbundenen Gegenstand, beispielsweise einem Fahrzeug, kann alternativ oder zusätzlich gezielt dazu eingesetzt werden, die Umgebungsabtastung zu verbessern, indem der Abtaststrahl nacheinander in unterschiedliche Richtungen ausgesandt wird oder nacheinander unterschiedliche Orientierungen der Abtastebene eingestellt werden, um auf diese Weise eine Mehrbereichs- oder Mehrebenen-Abtastung zu realisieren. Auch für eine solche Anwendung muss die Richtung der ausgesandten Strahlung verändert werden können.

Die grundsätzlich bekannten Erfassungseinrichtungen mit starrem Abtaststrahl bzw. starrer Abtastebene, bei denen keine Veränderung der Richtung der ausgesandten Strahlung relativ zur Erfassungseinrichtung möglich ist, werden diesen Anforderungen ersichtlich nicht gerecht.

EP 1 130 416 A2 beschreibt eine an einem Fahrzeug angebrachte Laserradar-Einrichtung, deren Ausrichtung in Abhängigkeit von Messwerten verstellt wird, die von vorderen und hinteren Höhensensoren bereitgestellt werden, welche die vordere und die hintere Höhe des Fahrzeugs und somit die Fahrzeugneigung bestimmen. Diese bekannte Vorrichtung unterscheidet sich von der Erfassungseinrichtung gemäß Anspruch 1 dadurch, dass die Neigung des Fahrzeugs bzw. die Abweichung der Neigung von einer Sollneigung nicht mit optischen Mitteln gemessen wird, und dass das Laserradar zur Änderung der Ausrichtung als Ganzes verstellt wird.

Aus EP 0 989 387 A2 ist ein Laservermessungsinstrument bekannt, das einen Inklinationssensor umfasst, mit dem eine absolute Schrägstellung gemessen werden kann.

JP 08166212 A betrifft eine Einrichtung zur Positions- oder Längenmessung.

Aus US 3,961,179 ist ein Strahlführungssystem bekannt, das entweder als Sender oder Empfänger von elektromagnetischer Strahlung konzipiert ist. Die "Blickrichtung" dieses Systems kann durch Verstellen eines optischen Bauteils in Form eines Reflektors verändert werden, und zwar in Abhängigkeit von einem Sensor, der dazu ausgebildet ist, die Position eines im Blickfeld des Systems liegenden Objekts zu bestimmen.

Aus DE 199 02 287 A1 ist eine automatische Justage eines Laserscanner-Sensors bekannt. Hierbei wird mit separaten, geometrisch wohldefinierten Körpern gearbeitet, die für die Justage des Sensors innerhalb des Scanbereiches positioniert und im Rahmen eines sukzessiven Verfahrens zur Einstellung eines gewünschten Nickwinkels benutzt werden. Der Sensor ist über eine zur Nickwinkeleinstellung verstellbare Aufhängung an einem stehenden Fahrzeug befestigt, während die Körper im Sichtbereich des Sensors vor dem Fahrzeug installiert werden. Diese Vorgehensweise ist relativ umständlich und insbesondere nicht bei sich bewegendem Sensor möglich. Insbesondere kann dieses bekannte Prinzip also nicht zur Kompensation von während der Fahrt auftretenden Bodenunebenheiten eingesetzt werden.

DE 199 61 260 C2 ist auf eine Vorrichtung zur Befestigung eines Sensors gerichtet, die dazu dienen soll, den Sensor auf möglichst einfache Weise an einer Unterlage befestigen und justieren zu können.

Aufgabe der Erfindung ist es, eine Möglichkeit zu schaffen, die Richtung der ausgesandten Strahlung einer Erfassungseinrichtung auf einfache Weise ändern zu können, wobei insbesondere die Richtungsänderung bei sich bewegender Erfassungseinrichtung und sowohl relativ zur Erfassungseinrichtung selbst als auch relativ zu einem raumfesten Bezugssystem möglich sein soll. Insbesondere soll außerdem eine automatische Selbstausrichtung der ausgesandten Strahlung in Bezug auf eine vorgegebene Sollrichtung realisierbar sein.

Die Lösung dieser Aufgabe erfolgt durch die Merkmale des Anspruchs 1.

Erfindungsgemäß umfasst die Erfassungseinrichtung eine optische Nachweiseinrichtung, mit der eine Abweichung der Richtung der ausgesandten Strahlung von einer vorgebbaren Sollrichtung mit optischen Mitteln messbar ist, und eine optische Verstelleinrichtung, mit der die Richtung der ausgesandten Strahlung relativ zu der Erfassungseinrichtung in Abhängigkeit von einer gemessenen Abweichung mit optischen Mitteln korrigierbar ist. Die Verstelleinrichtung umfasst eine optische Baugruppe mit einer Mehrzahl von optischen Elementen, die zur Richtungsänderung der ausgesandten Strahlung relativ zueinander bewegbar sind. Insbesondere kann die optische Baugruppe eine bewegbare Korrekturlinse umfassen. Die Korrekturlinse kann mit einer Komponente senkrecht zur optischen Achse der vom Sender ausgesandten Strahlung bewegbar sein.

Die Lösung der Aufgabe erfolgt außerdem durch ein Korrekturverfahren mit den Merkmalen des unabhängigen Verfahrensanspruchs.

Anders als im vorstehend genannten Stand der Technik erfolgt erfindungsgemäß die gewünschte Richtungsänderung nicht durch Manipulation im Bereich der mechanischen Anbringung der Erfassungseinrichtung am jeweiligen stationären oder bewegbaren Gegenstand. Vielmehr sind erfindungsgemäß optische Mittel vorgesehen, mit denen zunächst eine Richtungsabweichung in Bezug auf die jeweils vorgegebene Sollrichtung ermittelt und dann in Abhängigkeit von dieser Abweichung die entsprechende Korrektur durchgeführt werden kann.

Der erfindungsgemäße Einsatz optischer Mittel für Nachweis und Korrektur eröffnet eine Reihe von vorteilhaften Anwendungsmöglichkeiten und vereinfacht den Aufbau der Erfassungseinrichtung, ohne die Genauigkeit der Strahlausrichtung zu beeinträchtigen. Insbesondere erlauben die optischen Mittel eine präzise und schnelle Richtungsänderung, die darüber hinaus auch bei sich bewegender Erfassungseinrichtung automatisch im Rahmen eines Regelkreises durchgeführt werden kann.

Vorteilhafte Ausführungsformen der Erfindung sind in den abhängigen Ansprüchen, der Beschreibung sowie der Zeichnung angegeben.

Bei den optischen Mitteln zur Messung der Abweichung und den optischen Mitteln zur Korrektur der Strahlungsrichtung handelt es sich vorzugsweise ausschließlich um Bestandteile der Erfassungseinrichtung. Hierdurch kann die Erfassungseinrichtung unabhängig von externem Zusatzgerät und insbesondere ohne zusätzliche Körper, die im Sichtbereich des Sensors installiert werden müssen, ausgerichtet werden.

Bevorzugt wird durch die optische Nachweiseinrichtung und die optische Verstelleinrichtung ein Regelkreis gebildet, in welchem die Richtung der ausgesandten Strahlung die Regelgröße und die Sollrichtung die Führungsgröße darstellt. Eine solche Regelung, die auch als "closed loop"-Verfahren bezeichnet wird, ermöglicht auf besonders einfache Weise eine automatische Selbstausrichtung der ausgesandten Strahlung in Bezug auf die Sollrichtung.

Die Lage der Sollrichtung kann sowohl relativ zu einem raumfesten Bezugssystem als auch zu einem fest mit der Erfassungseinrichtung verbundenen Bezugssystem vorgegeben werden.

Im ersten Fall kann beispielsweise sichergestellt werden, dass eine mit einem Fahrzeug verbundene Erfassungseinrichtung bezüglich des Untergrundes, auf dem sich das Fahrzeug fortbewegt, stets in die gleiche Richtung "blickt", und zwar unabhängig von der Lage des Fahrzeugs im Raum. Hierdurch wird die Umgebungsüberwachung unabhängig von dem Auftreten von Bodenunebenheiten. Die Sollrichtung kann dabei beispielsweise in einer Horizontalebene liegen, wobei aber grundsätzlich beliebige Sollrichtungen möglich sind und beispielsweise eine Vorgabe auch dahingehend erfolgen kann, dass abweichend von einer horizontalen Ausrichtung die ausgesandte Strahlung stets in einer vorgegebenen Entfernung vor dem Fahrzeug auf den Boden trifft.

Im zweiten Fall kann beispielsweise eine Mehrebenen-Abtastung realisiert werden, indem die Abtastebene relativ zur Erfassungseinrichtung und somit gegebenenfalls relativ zu einem Fahrzeug, an welchem die Erfassungseinrichtung fest angebracht ist, nacheinander in unterschiedliche Winkelstellungen gekippt wird, um durch diese (zeitliche) "Auffächerung" der ausgesandten Strahlung bzw. der Abtastebenen z.B. zusätzlich zu einer Abtastung in horizontaler Richtung eine oder mehrere Abtastungen schräg nach oben sowie eine oder mehrere Abtastungen schräg nach unten vorzunehmen. Auf diese Weise kann mit einer einzigen Sende-/Empfangs-Einheit eine Quasi-3D-Abtastung realisiert werden, indem im Überwachungsbereich befindliche Objekte in unterschiedlichen Höhenniveaus abgetastet werden.

Des Weiteren ist es erfindungsgemäß möglich, eine relativ zu einem raumfesten Bezugssystem vorgegebene Sollrichtung zu variieren, um z.B. ebenfalls eine Mehrebenen-Abtastung zu realisieren, bei welcher die "Auffächerung" der Abtaststrahlung nicht in Bezug auf die Erfassungseinrichtung bzw. das Fahrzeug, sondern in Bezug auf die Umgebung fest vorgegeben ist. Es kann hierdurch beispielsweise sichergestellt werden, dass eine zentrale Abtastebene stets in einer Horizontalebene verläuft.

Bevorzugt sind die Nachweiseinrichtung und die Verstelleinrichtung Bestandteile eines optischen Gesamtsystems für die vom Sender ausgesandte Strahlung. Dabei ist vorzugsweise die Verstelleinrichtung auch Bestandteil des-Detektionsstrahlengangs, d.h. der im Überwachungsbereich reflektierten Strahlung.

Nach einer bevorzugten Ausgestaltung der Erfindung ist die Erfassungseinrichtung mit einer optisch wirksamen Referenzeinheit ausgestattet, die zumindest einen Teil der vom Sender ausgesandten Strahlung auf unterschiedliche Art und Weise beeinflussen kann, und zwar in Abhängigkeit von der Lage der Erfassungseinrichtung im Raum und/oder von der Stellung der Verstelleinrichtung.

In einem konkreten Ausführungsbeispiel umfasst die Referenzeinheit eine Strahlbeeinflussungseinrichtung mit einer Reflexionsfläche, die sich von selbst entsprechend einer vorgegebenen Lage im Raum ausrichtet. Insbesondere kann es sich bei der Reflexionsfläche um die Grenzschicht zweier nicht mischbarer Flüssigkeiten handeln. Eine solche Grenzschicht verläuft stets horizontal, so dass durch Integration einer solchen Grenzschicht in den Strahlengang eines optischen Gesamtsystems der Umstand ausgenutzt werden kann, dass sich bei einer Bewegung der Erfassungseinrichtung im Raum die Lage der stets horizontal verlaufenden Reflexionsfläche relativ zu den übrigen optischen Komponenten, die zur gemeinsamen Bewegung mit der Erfassungseinrichtung im Raum gezwungen sind, verändert. Hierdurch ändert sich die Ausbreitung der Strahlung innerhalb des optischen Gesamtsystems in Abhängigkeit von der Lage der Erfassungseinrichtung im Raum. Dieser Unterschied in der Strahlungsausbreitung kann durch geeignete Mittel nachgewiesen werden, womit eine Messgröße zur Verfügung steht, auf deren Basis eine Korrektur erfolgen kann.

Die Nachweiseinrichtung kann z.B. einen ortsauflösenden Detektor mit einer vorgelagerten Abbildungsoptik umfassen, mit der sowohl ein von der Referenzeinheit bzw. der Strahlbeeinflussungseinrichtung unbeeinflusster Anteil als auch ein beeinflusster Anteil der Strahlung auf dem Detektor abgebildet werden kann.

Für jede Lage der Erfassungseinrichtung im Raum existiert somit ein spezifisches, mittels des Detektors nachweisbares Bild. Wird ein bestimmtes Bild als Sollrichtung definiert, kann eine Abweichung der ausgesandten Strahlung von der Sollrichtung mittels des Detektors insbesondere hinsichtlich Betrag und Richtung gemessen und das Messergebnis als Basis für die Korrektur der Richtung der ausgesandten Strahlung verwendet werden. Insbesondere kann das Messergebnis von einer zentralen Steuereinheit in Signale zur Ansteuerung der Verstelleinrichtung umgesetzt werden, mit deren optischen Mitteln die Korrektur durchgeführt wird.

Von besonderem Vorteil ist hierbei, dass jede beliebige Richtung der ausgesandten Strahlung als Sollrichtung vorgegeben werden kann. Eine stets horizontale Ausrichtung der vorstehend erwähnten, als Reflexionsfläche dienenden Grenzschicht beispielsweise bedeutet nicht, dass die Sollrichtung ebenfalls horizontal oder unter einem festen Winkel zur Horizontalen verlaufen muss. Vielmehr ist durch die erfindungsgemäße Referenzeinheit nicht mehr, aber auch nicht weniger als eine Referenz vorgegeben, die unterschiedliche Lagen der Erfassungseinrichtung im Raum und/oder unterschiedliche Stellungen der Verstelleinrichtung voneinander unterscheidbar und somit nachweisbar und kompensierbar macht.

Die Erfindung betrifft außerdem eine Verwendung einer erfindungsgemäßen Vorrichtung und/oder eines erfindungsgemäßen Verfahrens zur Überwachung der Umgebung eines insbesondere autonomen Fahrzeuges, mit dem die Erfassungseinrichtung fest verbunden ist.

Die Erfindung wird im Folgenden beispielhaft unter Bezugnahme auf die Zeichnung beschrieben. Es zeigen:
- Fig. 1: eine schematische Darstellung zur Erläuterung des erfindungsgemäßen Prinzips, und
- Fig. 2a - 2c: schematische Darstellungen eines Ausführungsbeispiels einer erfindungsgemäßen Erfassungsvorrichtung in unterschiedlichen Lagen im Raum bzw. unterschiedlichen Stellungen einer Verstelleinrichtung.

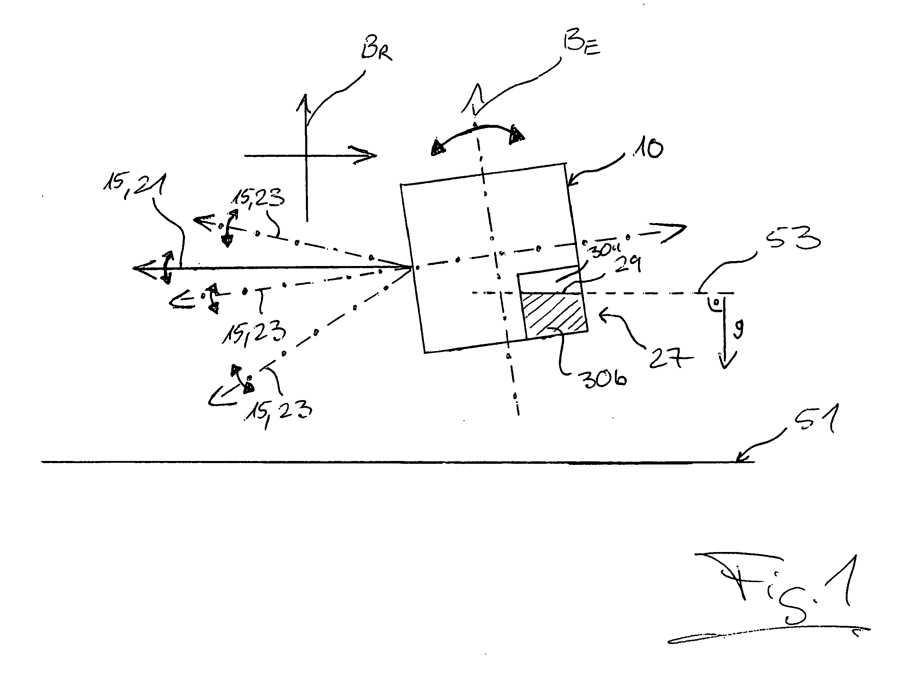

Die in Fig. 1 lediglich schematisch dargestellte Erfassungseinrichtung 10 kann sowohl an einem im Raum bewegbaren Träger, beispielsweise einem autonomen Fahrzeug, befestigt oder stationär angeordnet sein. In beiden Fällen ist die Erfassungseinrichtung 10 zu Bewegungen im Raum, also zu Bewegungen relativ zu einem raumfesten Bezugssystem B_{R} in der Lage.

Bei Anbringung an einem bewegbaren Träger kann die Bewegung der Erfassungseinrichtung 10 im Raum zusätzlich zu einer Fortbewegung auf einem als ideal angenommenen, horizontal verlaufenden Boden 51 Verkippungen um eine oder mehrere Achsen umfassen. Diese Bewegungen können beispielsweise Nickbewegungen sein, die auftreten, wenn das Fahrzeug Bodenunebenheiten ausgesetzt ist. In stationären Anwendungen können sich unterschiedliche Orientierungen der Erfassungseinrichtung 10 im Raum z.B. dadurch ergeben, dass sich durch Wiederanbringung der Erfassungseinrichtung an einer Halterung Abweichungen von einer vorherigen Befestigungsposition einstellen.

In Fig. 1 ist zum einen mit einer durchgezogenen Linie eine relativ zu dem raumfesten Bezugssystem B_{R} fest vorgegebene Sollrichtung 21 dargestellt, die parallel zu einer Horizontalebene 53 verläuft. Mit der nachstehend näher erläuterten erfinderischen optischen Anordnung ist es möglich, Strahlung 15 stets in Sollrichtung 21 auszusenden, und zwar unabhängig von der Lage der Erfassungseinrichtung 10 im Raum. Die Erfindung ermöglicht mit anderen Worten eine automatische Selbstausrichtung der zum Beispiel in Form einer Abtastebene ausgesandten Strahlung entsprechend der Sollrichtung 21. Hierdurch ist die Abtastung des Überwachungsbereiches unabhängig von eventuell vorhandenen Bodenunebenheiten, die aufgrund der daraus resultierenden Nickbewegungen des Fahrzeugs, mit dem die Erfassungseinrichtung 10 fest verbunden ist, ohne die Erfindung zu entsprechenden Verkippungen der Abtastebene führen würden.

Durch den kleinen Doppelpfeil ist angedeutet, dass es die Erfindung außerdem ermöglicht, die Sollrichtung 21 zu variieren, d.h. auch solche Sollrichtungen 21 relativ zu dem raumfesten Bezugssystem B_{R} vorzugeben, die nicht horizontal verlaufen.

Zum anderen sind in Fig. 1 jeweils mit einer strichpunktierten Linie verschiedene Sollrichtungen 23 dargestellt, die relativ zu einem fest mit der Erfassungseinrichtung 10 verbundenen Bezugssystem B_{E} vorgegeben sind. Bewegungen der Erfassungseinrichtung 10 im Raum wirken sich folglich nicht auf die Orientierungen dieser Sollrichtungen 23 relativ zur Erfassungseinrichtung 10 selbst aus. Mit der Erfindung ist es möglich, die Richtung der ausgesandten Strahlung 15 relativ zur Erfassungseinrichtung 10 zu verändern. Bei Aussendung der Strahlung 15 in Form einer Abtastebene beispielsweise kann somit eine Abtastung des Überwachungsbereiches nacheinander in unterschiedlichen Abtastebenen erfolgen. Eine solche (zeitliche) Auffächerung der Abtastebenen ist in Fig. 1 angedeutet. Durch die kleinen Doppelpfeile ist wiederum zum Ausdruck gebracht, dass die Sollrichtung 23 jeder Abtastebene individuell vorgegeben werden kann.

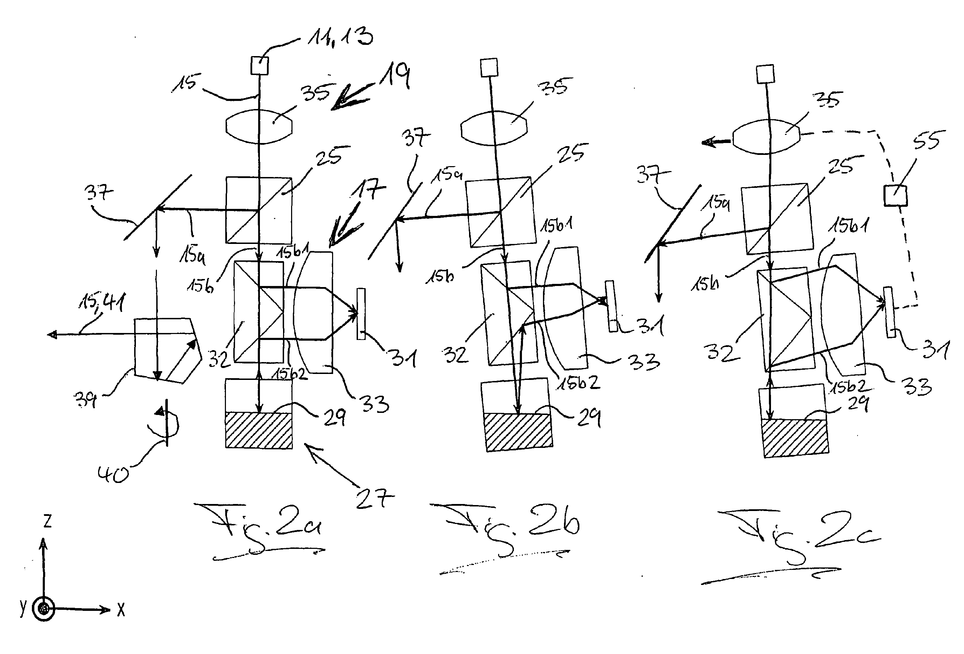

Die obigen Ausführungen und die Darstellungen in Fig. 1 sowie in Fig. 2 gelten analog für eine Erfassungseinrichtung, bei der nicht mit Abtastebenen gearbeitet, sondern die Strahlung 15 in Form eines einzigen, in Fig. 1 in der Zeichenebene liegenden Abtaststrahles ausgesendet wird, so dass im Überwachungsbereich befindliche Objekte nicht - wie bei einer Abtastebene - zeilenförmig, sondern punktförmig abgetastet werden.

Von den Komponenten der optischen Gesamtanordnung, die erfindungsgemäß zur Korrektur bzw. Veränderung der Richtung der ausgesandten Strahlung 15 an oder in der Erfassungseinrichtung vorgesehen sind, zeigt Fig. 1 zur Veranschaulichung lediglich schematisch eine Referenzeinheit 27. Die Referenzeinheit 27 umfasst eine Strahlbeeinflussungseinrichtung 29 in Form einer Grenzschicht zweier nicht mischbarer Flüssigkeiten 30a, 30b, die in den Strahlengang integriert ist und als Reflexionsfläche für sich innerhalb der optischen Gesamtanordnung ausbreitende Strahlung dient. Die Reflexionsfläche 29 liegt stets in einer Horizontalebene 53 und bildet somit eine von der Lage der Erfassungseinrichtung 10 im Raum unabhängige optische Referenz innerhalb der optischen Gesamtanordnung, d.h. durch den großen Doppelpfeil angedeutete Bewegungen der Erfassungseinrichtung 10 im Raum bleiben ohne Einfluss auf die stets horizontale Ausrichtung der Reflexionsfläche 29. Anschaulich ausgedrückt könnte diese Referenz somit gewissermaßen als eine Art "künstlicher Horizont" der Erfassungseinrichtung bezeichnet werden. Es ist aber darauf hinzuweisen, dass eine stets horizontale Ausrichtung dieser Referenz nicht zwingend ist. Von Bedeutung ist vielmehr allgemein die Unabhängigkeit einer in den Strahlengang integrierten optischen Komponente von der Lage der Erfassungseinrichtung im Raum. So könnte erfindungsgemäß beispielsweise prinzipiell auch eine stets vertikal orientierte Reflexionsfläche als Referenzeinheit dienen.

Eine Möglichkeit, diese optische Referenz zu nutzen, wird im Folgenden anhand von Fig. 2 beschrieben. Dabei werden der Einfachheit halber lediglich Nickbewegungen der Erfassungseinrichtung 10 betrachtet, d.h. Bewegungen um eine Achse y, die horizontal und senkrecht zur Fahrtrichtung x eines nicht dargestellten Fahrzeugs verläuft, mit welchem die Erfassungseinrichtung fest verbunden ist.

Die erfindungsgemäße Erfassungseinrichtung umfasst eine nicht näher dargestellte Sende-/Empfangs-Einheit mit einem Sender 11, z.B. in Form einer Laserdiode, und einem Empfänger 13, z.B. in Form einer Fotodiode, jeweils mit zugehöriger Sende- bzw. Empfangsoptik. Da derartige optische Erfassungseinrichtungen z.B. in Form von Laserscannern, mit denen mittels der ausgesandten Strahlung nach dem Laufzeitprinzip Entfernungen von Objekten im Überwachungsbereich gemessen werden, hinreichend bekannt sind, wird von einer näheren Beschreibung der Sende-/Empfangs-Einheit abgesehen.

Im vorliegenden Ausführungsbeispiel ist die Sende-/Empfangs-Einheit derart ausgebildet, dass ein deckungsgleiches Zwischenbild des Senders 11 und des Empfängers 13 erzeugt wird, das mittels einer Korrekturlinse 35 auf Unendlich abgebildet wird. Diese kollimierte Strahlung fällt zunächst auf einen Strahlteiler 25, der eine um 45° gegenüber der optischen Achse geneigte teildurchlässige Reflexionsfläche aufweist und die vom Sender 11 ausgesandte Strahlung 15 in einen reflektierten, zur Aussendung in den Überwachungsbereich vorgesehenen Erfassungsanteil 15a sowie in einen durchgelassenen Korrekturanteil 15b aufteilt, welcher in nachstehend erläuterter Weise zur Messung einer Abweichung der Richtung der ausgesandten Strahlung 15, hier der Richtung einer Abtastebene 41, von einer Sollrichtung dient.

Der Korrekturanteil 15b der Strahlung 15 breitet sich innerhalb einer optischen Nachweiseinrichtung 17 aus, die eine Mehrzahl optischer Bauelemente umfasst. Dem ersten Strahlteiler 25 nachgeordnet ist ein weiterer Strahlteiler 32 mit zwei um 45° gegenüber der optischen Achse geneigten teildurchlässigen Reflexionsflächen, die einen rechten Winkel einschließen, so dass aus entgegengesetzten Richtungen entlang der optischen Achse einfallende Strahlung von dem Strahlteiler 32 jeweils um 90° zur gleichen Seite abgelenkt wird.

Ein Anteil 15b des Korrekturanteils 15b der Strahlung 15 gelangt direkt nach Reflexion an der ersten Reflexionsfläche des Strahlteilers 32 zu einer Linse 33, welche die Strahlung auf einem ortsauflösenden Detektor 31, z.B. einem so genannten Bildaufnehmer, abbildet.

Ein weiterer Anteil 15b2 des Korrekturanteils 15b gelangt durch den Strahlteiler 32 hindurch, trifft auf die bereits in Verbindung mit Fig. 1 erwähnte Referenzeinheit 27 und wird von deren stets horizontal orientierter Reflexionsfläche 29, die von der Grenzschicht zweier nicht mischbarer Flüssigkeiten 30a, 30b gebildet wird, reflektiert. Die von der Grenzschicht 29 reflektierte Strahlung gelangt über die zweite Reflexionsfläche des Strahlteilers 32 ebenfalls zur Linse 33 und wird ebenfalls durch diese auf dem Detektor 31 abgebildet.

Die aktive Fläche des Detektors 31 ist in der Brennebene der Linse 33 angeordnet, so dass sowohl die von der Referenzeinheit 27 unbeeinflusste Strahlung 15b 1 als auch die von der Referenzeinheit 27 beeinflusste, d.h. von der Grenzschicht 29 reflektierte, Strahlung 15b2 auf dem Detektor 31 ein Punktbild erzeugt.

Bei Orientierung der Erfassungseinrichtung 10 im Raum gemäß Fig. 2a, also bei vertikal orientierter optischer Achse, fällt die Strahlung senkrecht auf die Grenzschicht 29, so dass beide Strahlungsanteile 15b 1 und 15b2 in Ausbreitungsrichtung vor der Linse 33 horizontal, insbesondere also parallel zueinander verlaufen. Die beiden erwähnten Punktbilder sind folglich auf dem Detektor 31 deckungsgleich, d.h. fallen auf dem Detektor 31 zusammen.

Die Richtung der Abtastebene 41 im Raum, die sich bei dieser Lage der Erfassungseinrichtung 10 im Raum ergibt, kann als Sollrichtung im Sinne der Erfindung definiert werden. Die Abtastebene 41 ist folglich dann korrekt - hier horizontal - ausgerichtet, wenn auf dem Detektor 31 kein von Null verschiedener Abstand zwischen den beiden erwähnten Punktbildern gemessen wird.

Der Erfassungsanteil 15a der vom Sender 11 ausgesandten Strahlung 15 fällt nach Verlassen des ersten Strahlteilers 25 zunächst auf einen festen Spiegel 37, dessen Reflexionsfläche um 45° gegenüber der optischen Achse geneigt ist, und gelangt von dem Spiegel 37 auf eine im Betrieb um eine parallel zur optischen Achse verlaufende Drehachse 40 rotierende Ablenkeinrichtung 39, die in diesem Ausführungsbeispiel als so genanntes Penta-Prisma ausgebildet ist. Durch Rotation des Prismas 39 wird aus der vom festen Spiegel 37 kommenden, hier vertikal einfallenden Strahlung die Abtastebene 41 erzeugt, die bei Orientierung der Erfassungseinrichtung 10 im Raum gemäß Fig. 2a in einer Horizontalebene verläuft.

Das Penta-Prisma 39 zeichnet sich dadurch aus, dass der Winkel zwischen einfallender und ausfallender Strahlung stets 90° beträgt, und zwar unabhängig von der Orientierung des Penta-Prismas 39 relativ zur einfallenden Strahlung. Von diesem Umstand macht die hier beschriebene optische Gesamtanordnung in einer nachstehend näher erläuterten Weise Gebrauch.

Fig. 2b zeigt die Erfassungseinrichtung in einem um die y-Achse gekippten Zustand, wie er sich beispielsweise ergibt, wenn ein die Erfassungseinrichtung tragendes Fahrzeug über eine Bodenunebenheit fährt. Bei Fahrtrichtung nach links in Fig. 2b würde ohne die erfindungsgemäße Verstell- bzw. Korrekturfunktion die Abtastebene 41 (Fig. 2a) nicht mehr horizontal ausgerichtet sein, sondern in einer bestimmten Entfernung vor dem Fahrzeug auf den Boden treffen, was fälschlicherweise die Detektion eines Objektes vortäuschen kann.

In der gekippten Stellung gemäß Fig. 2b ist die optische Achse der optischen Gesamtanordnung nicht mehr vertikal orientiert, d.h. verläuft nicht mehr senkrecht zur Reflexionsfläche 29 der Referenzeinheit 27. Dies hat zur Folge, dass die auf die Reflexionsfläche 29 treffende Strahlung nicht mehr in sich zurück, sondern unter einem von Null verschiedenen Winkel reflektiert wird, wodurch die beiden Strahlungsanteile 15b1 und 15b2, welche den Strahlteiler 32 in Richtung der Linse 33 verlassen, nicht mehr parallel zueinander verlaufen. Auf dem ortsauflösenden Detektor 31 fallen deshalb die beiden Punktbilder nicht mehr zusammen, sondern sind voneinander beabstandet. Die unterscheidbaren Positionen der beiden Punktbilder auf dem Detektor 31 können nun von einer zentralen Steuereinheit 55 dazu verwendet werden, Signale zur Ansteuerung der Korrekturlinse 35 abzuleiten, um die Korrekturlinse 35 derart anzusteuern, dass die Ausbreitung der Strahlung 15 in der optischen Gesamtanordnung derart geändert bzw. korrigiert wird, dass die beiden Punktbilder wieder zur Deckung gebracht werden, die Verkippung der Erfassungseinrichtung also insofern kompensiert wird.

Die Korrekturlinse 35 ist senkrecht zur optischen Achse beweglich angeordnet. Die Bewegung der Korrekturlinse 35 kann beispielsweise über ein zweidimensionales Festkörpergelenk und eine Tauchspulenaktorik erfolgen.

Wie Fig. 2c zeigt, hat die durch einen Pfeil angedeutete Verstellbewegung der Korrekturlinse 35 eine Änderung des Strahlungsverlaufes durch die einzelnen optischen Komponenten zur Folge, die im Ergebnis den Einfallswinkel der Strahlung auf die Reflexionsfläche 29 der Referenzeinheit 27 verändert. Sobald wieder ein senkrechter Strahlungseinfall auf die Reflexionsfläche 29 eingestellt ist, verlassen die beiden Strahlungsanteile 15b1 und 15b2 den Strahlteiler 32 wieder in gegenseitiger Parallelausrichtung, so dass auf dem Detektor 31 die Punktbilder wieder zusammenfallen, wenn auch an anderer Stelle als im Ausgangszustand gemäß Fig. 2a, was jedoch hinsichtlich der Auswertung des von dem Detektor 31 "gesehenen" Bildes unkritisch ist.

Die erwähnte zentrale Steuereinheit 55 bzw. ein in der Steuereinheit 55 ablaufender Regelungsalgorithmus ist derart ausgelegt, dass ein Regelkreis realisiert ist, bei welchem die mittels der verstellbaren Korrekturlinse 35 einstellbare Richtung der ausgesandten Strahlung 15 als Regelgröße und die jeweils vorgegebene Sollrichtung als Führungsgröße dient. Der Sollrichtung entspricht dabei - wie erläutert - der Zustand eines Zusammenfallens der beiden Punktbilder auf dem Detektor 31.

Nach erfolgter Korrektur gemäß Fig. 2c verläuft die vom festen Spiegel 37, der zusammen mit den übrigen Komponenten der optischen Gesamtanordnung aus der ursprünglichen Lage gemäß Fig. 2a verkippt wurde, reflektierte Strahlung wieder in vertikaler Richtung. Das in Fig. 2c nicht dargestellte, ebenfalls zusammen mit den übrigen Komponenten der optischen Gesamtanordnung gekippte, während des Betriebs rotierende Penta-Prisma 39 zeichnet sich - wie bereits erwähnt - dadurch aus, dass es stets für eine Ablenkung der einfallenden Strahlung um 90° sorgt, und zwar unabhängig von dem Kippwinkel des Penta-Prismas 39 im Raum. Daher ist auch bei gekippter Erfassungseinrichtung die Abtastebene 41 weiterhin horizontal ausgerichtet, was mit einem anstelle des Penta-Prismas 39 vorgesehenen, unter 45° zur Ausbreitungsrichtung der Strahlung angeordneten einfachen Spiegel trotz der Wirkung der Korrekturlinse 35 nicht möglich wäre, da dieser insofern nicht "kippneutral" ist.

Die Korrektur der Verkippung der Erfassungseinrichtung durch die Korrekturlinse 35 resultiert in der beschriebenen Gesamtanordnung folglich in einer Wiederherstellung der horizontalen Ausrichtung der Abtastebene 41. Indem ein Regelkreis realisiert wird, ergibt sich eine automatische Selbstausrichtung der ausgesandten Strahlung, die optische Prinzipien nutzt und den Einsatz mechanischer Verstelleinrichtungen auf ein Minimum reduziert. Insbesondere ist für die Richtungsänderung bzw. - korrektur keine Bewegung der Erfassungseinrichtung als Ganzes erforderlich. Die Korrektur erfolgt vielmehr ausschließlich mit "internen" optischen Komponenten der Erfassungseinrichtung, die - mit Ausnahme der sich stets horizontal ausrichtenden Grenzfläche 29 - zur gemeinsamen Bewegung mit der Erfassungseinrichtung im Raum gezwungen sind.

Ein Vorteil der Erfindung ist, dass grundsätzlich jede beliebige Orientierung oder Lage der Abtastebene 41 (bzw. eines einzigen Abtaststrahles im Fall eines nicht-scannenden Systems) im Raum als Sollrichtung vorgegeben und in das System durch einen Einlernvorgang eingegeben werden kann. Insbesondere kann also eine Sollrichtung vorgegeben werden, bei der die beiden Punktbilder auf dem Detektor 31 nicht zusammenfallen. Die Sollrichtung kann - lediglich beispielhaft - der Kipplage der Erfassungseinrichtung gemäß Fig. 2b entsprechen. Der die erwähnte zentrale Steuereinheit 55 umfassende Regelkreis strebt dann im Fall einer Verkippung der Erfassungseinrichtung aus der Lage gemäß Fig. 2b heraus danach, das von den beiden Punktbildern gebildete Soll-Gesamtbild wiederherzustellen, indem die Korrekturlinse 35 entsprechend angesteuert wird.

Indem die Erfindung es auf diese Weise erlaubt, grundsätzlich jede beliebige Orientierung der Abtastebene bzw. des Abtaststrahles im Raum als Sollrichtung vorzugeben, besteht außerdem die Möglichkeit, während des Betriebs der Erfassungseinrichtung zwischen verschiedenen, insbesondere zuvor eingelernten Sollrichtungen "umzuschalten", so dass eine Abtastung der Umgebung nacheinander in unterschiedlichen Abtastebenen, insbesondere gemäß einem vorgegebenen zeitlichen Schema, durchgeführt werden kann.

Wie vorstehend bereits erwähnt, wurden bei der Erläuterung der Erfindung anhand von Fig. 1 und 2 lediglich Kippbewegungen der Erfassungseinrichtung 10 um die y-Achse in Fig. 2 betrachtet. Grundsätzlich ist das erfindungsgemäße Prinzip der Richtungsänderung bzw. -korrektur auch bei beliebigen Verkippungen anwendbar, die um eine Achse erfolgen, welche sich zumindest mit einer Komponente in x-Richtung erstreckt. Hierzu ist dann die Korrekturlinse 35 beliebig innerhalb der x-y-Ebene bewegbar.

### Bezugszeichenliste

- 10: Erfassungseinrichtung
- 11: Sender
- 13: Empfänger
- 15: vom Sender ausgesandte Strahlung
- 15a: Erfassungsanteil
- 15b: Korrekturanteil
- 15b1: unbeeinflusster Anteil
- 15b2: beeinflusster Anteil
- 17: Nachweiseinrichtung
- 19: Verstelleinrichtung
- 21: Sollrichtung bezüglich Raum
- 23: Sollrichtung bezüglich Erfassungseinrichtung
- 25: Strahlteiler
- 27: Referenzeinheit
- 29: Strahlbeeinflussungseinrichtung, Reflexionsfläche, Grenzschicht
- 30a: Flüssigkeit
- 30b: Flüssigkeit
- 31: Detektor
- 32: Strahlteiler
- 33: Abbildungsoptik für Detektor
- 35: Korrekturlinse
- 37: fester Spiegel
- 39: Ablenkeinrichtung, Penta-Prisma
- 40: Drehachse
- 41: Abtastebene
- 51: Boden
- 53: Horizontalebene
- 55: zentrale Steuereinheit

- B_{R}: raumfestes Bezugssystem
- B_{E}: Bezugssystem der Erfassungseinrichtung

## Patentansprüche

1. Optische Erfassungseinrichtung, insbesondere Laserscanner, mit
wenigstens einem Sender (11) zur Aussendung elektromagnetischer Strahlung in einen Überwachungsbereich,
zumindest einem Empfänger (13) für im Überwachungsbereich reflektierte Strahlung,
einer zusätzlich zu dem Sender (11) und dem Empfänger (13) vorgesehenen optischen Nachweiseinrichtung (17), mit der eine durch eine Änderung der Lage der Erfassungseinrichtung im Raum hervorgerufene Abweichung der Richtung der ausgesandten Strahlung (15) von einer vorgebbaren Sollrichtung (21, 23) mit optischen Mitteln messbar ist, und
einer optischen Verstelleinrichtung (19), mit der die Richtung der ausgesandten Strahlung (15) relativ zu der Erfassungseinrichtung in Abhängigkeit von einer gemessenen Abweichung mit optischen Mitteln korrigierbar ist,
wobei die Verstelleinrichtung (19) eine optische Baugruppe mit einer Mehrzahl von optischen Elementen (35, 25) umfasst, die zur Richtungsänderung der ausgesandten Strahlung (15) relativ zueinander bewegbar sind.

2. Erfassungseinrichtung nach Anspruch 1,
**dadurch gekennzeichnet,**
**dass** die optische Baugruppe eine bewegbare Korrekturlinse (35) umfasst.

3. Erfassungseinrichtung nach Anspruch 2,
**dadurch gekennzeichnet,**
**dass** die Korrekturlinse (35) mit einer Komponente senkrecht zur optischen Achse der vom Sender ausgesandten Strahlung (15) bewegbar ist.

4. Erfassungseinrichtung nach einem der vorhergehenden Ansprüche,
**dadurch gekennzeichnet,**
**dass** die optischen Mittel zur Messung der Abweichung und die optischen Mittel zur Korrektur der Richtung der ausgesandten Strahlung (15) ausschließlich Bestandteile der Erfassungseinrichtung umfassen und insbesondere zur gemeinsamen Bewegung mit der Erfassungseinrichtung im Raum gezwungen sind.

5. Erfassungseinrichtung nach einem der vorhergehenden Ansprüche,
**dadurch gekennzeichnet,**
**dass** durch die optische Nachweiseinrichtung (17) und die optische Verstelleinrichtung (19) ein Regelkreis mit der Richtung der ausgesandten Strahlung (15) als Regelgröße und der Sollrichtung (21, 23) als Führungsgröße realisiert ist.

6. Erfassungseinrichtung nach einem der vorhergehenden Ansprüche,
**dadurch gekennzeichnet,**
**dass** die Lage der Sollrichtung (21, 23) relativ zu einem raumfesten Bezugssystem (B_{R}) oder zu einem fest mit der Erfassungseinrichtung verbundenen Bezugssystem (B_{E}) vorgegeben ist.

7. Erfassungseinrichtung nach einem der vorhergehenden Ansprüche,
**dadurch gekennzeichnet,**
**dass** die Nachweiseinrichtung (17) und die Verstelleinrichtung (19) Bestandteile eines optischen Gesamtsystems für die vom Sender (11) ausgesandte Strahlung (15) sind.

8. Erfassungseinrichtung nach einem der vorhergehenden Ansprüche,
**dadurch gekennzeichnet,**
**dass** der Nachweiseinrichtung (17) und der Verstelleinrichtung (19) ein gemeinsamer Strahlteiler (25) zugeordnet ist, mit dem die vom Sender (11) ausgesandte Strahlung (15) in einen zur Aussendung in den Überwachungsbereich vorgesehenen Erfassungsanteil (15a) und in einen Korrekturanteil (15b) für die Nachweiseinrichtung (17) aufteilbar ist.

9. Erfassungseinrichtung nach einem der vorhergehenden Ansprüche,
**dadurch gekennzeichnet,**
**dass** die Nachweiseinrichtung (17) eine optisch wirksame Referenzeinheit (27) mit einer Strahlbeeinflussungseinrichtung (29) umfasst, welche zumindest einen Teil (15b) der vom Sender (11) ausgesandten Strahlung (15) in einer von der Lage der Erfassungseinrichtung im Raum und/oder von der Stellung der Verstelleinrichtung (19) abhängigen Weise beeinflusst.

10. Erfassungseinrichtung nach Anspruch 9,
**dadurch gekennzeichnet,**
**dass** die Referenzeinheit (27) ein Bestandteil der Erfassungseinrichtung und insbesondere zur gemeinsamen Bewegung mit der Erfassungseinrichtung im Raum gezwungen ist.

11. Erfassungseinrichtung nach Anspruch 9 oder 10,
**dadurch gekennzeichnet,**
**dass** die Lage der Strahlbeeinflussungseinrichtung (29) im Raum konstant und insbesondere unabhängig von der Lage der Erfassungseinrichtung im Raum ist.

12. Erfassungseinrichtung nach einem der Ansprüche 9 bis 11,
**dadurch gekennzeichnet,**
**dass** die Lage der Strahlbeeinflussungseinrichtung (29) unter Ausnutzung der Schwerkraft konstant gehalten ist.

13. Erfassungseinrichtung nach einem der Ansprüche 9 bis 12,
**dadurch gekennzeichnet,**
**dass** die Strahlbeeinflussungseinrichtung eine Reflexionsfläche (29) umfasst.

14. Erfassungseinrichtung nach Anspruch 13,
**dadurch gekennzeichnet,**
**dass** die Reflexionsfläche (29) dazu ausgebildet ist, sich von selbst entsprechend einer vorgegebenen Lage im Raum auszurichten.

15. Erfassungseinrichtung nach Anspruch 13 oder 14,
**dadurch gekennzeichnet,**
**dass** die Reflexionsfläche von der Grenzschicht (29) zweier nicht mischbarer Flüssigkeiten gebildet ist.

16. Erfassungseinrichtung nach einem der vorhergehenden Ansprüche,
**dadurch gekennzeichnet,**
**dass** die Nachweiseinrichtung (17) einen ortsauflösenden Detektor (31) mit einer vorgelagerten Abbildungsoptik (33) umfasst, mit der sowohl ein von der Strahlbeeinflussungseinrichtung (29) unbeeinflusster Anteil (15b1) als auch ein von der Strahlbeeinflussungseinrichtung (29) beeinflusster Anteil (15b2) der sich in Richtung der Strahlbeeinflussungseinrichtung (29) ausbreitenden Strahlung (15b) auf dem Detektor (31) abbildbar ist.

17. Erfassungseinrichtung nach einem der Ansprüche 8 bis 16,
**dadurch gekennzeichnet,**
**dass** die Verstelleinrichtung (19) in Ausbreitungsrichtung der Strahlung gesehen vor dem Strahlteiler (25) angeordnet ist.

18. Erfassungseinrichtung nach einem der vorhergehenden Ansprüche,
**dadurch gekennzeichnet,**
**dass** die Verstelleinrichtung (19) zusätzlich zu einer Austrittsoptik (37, 39) vorgesehen ist, welche die Richtung der ausgesandten Strahlung (15) in einer von der Sollrichtung (21, 23) unabhängigen Weise verändert und insbesondere eine rotierende Ablenkeinrichtung (39) zur Realisierung einer Scan-Funktion umfasst.

19. Erfassungseinrichtung nach Anspruch 18,
**dadurch gekennzeichnet,**
**dass** die Ablenkeinrichtung (39) zur Realisierung einer Scan-Funktion die ausgesandte Strahlung (15) innerhalb einer Abtastebene (41) ablenkt, wobei vorzugsweise die Ablenkeinrichtung (39) ein Penta-Prisma umfasst.

20. Verfahren zum Korrigieren der Richtung der ausgesandten Strahlung (15) einer optischen Erfassungseinrichtung, insbesondere eines Laserscanners, die wenigstens einen Sender (11) zur Aussendung elektromagnetischer Strahlung in einen Überwachungsbereich und zumindest einen Empfänger (13) für im Überwachungsbereich reflektierte Strahlung umfasst, bei dem mittels einer zusätzlich zu dem Sender (11) und dem Empfänger (13) vorgesehenen optischen Nachweiseinrichtung (17) eine durch eine Änderung der Lage der Erfassungseinrichtung im Raum hervorgerufene Abweichung der Richtung der ausgesandten Strahlung (15) von einer vorgebbaren Sollrichtung (21, 23) mit optischen Mitteln gemessen und
in Abhängigkeit von der gemessenen Abweichung die Richtung der ausgesandten Strahlung (15) relativ zu der Erfassungseinrichtung mit optischen Mitteln korrigiert wird, indem eine Mehrzahl von optischen Elementen (35, 25), die eine optische Baugruppe bilden, relativ zueinander bewegt werden.

21. Verfahren nach Anspruch 20,
**dadurch gekennzeichnet,**
**dass** die Richtung der ausgesandten Strahlung (15) kontinuierlich und insbesondere auch bei sich im Raum bewegender Erfassungseinrichtung mit der Sollrichtung (21, 23) verglichen und erforderlichenfalls korrigiert wird.

22. Verfahren nach Anspruch 20 oder 21,
**dadurch gekennzeichnet,**
**dass** die Aussendung der Strahlung mit der Richtung der ausgesandten Strahlung (15) als Regelgröße und der Sollrichtung (21, 23) als Führungsgröße geregelt wird.

23. Verfahren nach einem der Ansprüche 20 bis 22,
**dadurch gekennzeichnet,**
**dass** die Sollrichtung (21, 23) wahlweise relativ zu einem raumfesten Bezugssystem (B_{R}) oder zu einem fest mit der Erfassungseinrichtung verbundenen Bezugssystem (B_{E}) vorgegeben wird.

24. Verfahren nach einem der Ansprüche 20 bis 23,
**dadurch gekennzeichnet,**
**dass** die Lage der Sollrichtung (21) im Raum konstant ist und die Korrektur der Richtung der ausgesandten Strahlung (15) bei sich im Raum bewegender Erfassungseinrichtung im Sinne einer automatischen Selbstausrichtung der ausgesandten Strahlung (15) erfolgt.

25. Verfahren nach einem der Ansprüche 20 bis 24,
**dadurch gekennzeichnet,**
**dass** die Lage der Sollrichtung (23) relativ zu der Erfassungseinrichtung gemäß einem vorgebbaren zeitlichen Schema verändert wird und die Korrektur der Richtung der ausgesandten Strahlung (15) bei sich im Raum bewegender oder ruhender Erfassungseinrichtung im Sinne einer Mehrbereichs- oder Mehrebenen-Abtastung des Überwachungsbereiches erfolgt.

26. Verfahren nach einem der Ansprüche 20 bis 25,
**dadurch gekennzeichnet,**
**dass** die Korrektur der Richtung der ausgesandten Strahlung (15) ausschließlich mit solchen Bestandteilen der Erfassungseinrichtung erfolgt, die zur gemeinsamen Bewegung mit der Erfassungseinrichtung im Raum gezwungen sind.

27. Verfahren nach einem der Ansprüche 20 bis 26,
**dadurch gekennzeichnet,**
**dass** zur Messung der Abweichung der Richtung der ausgesandten Strahlung (15) von der Sollrichtung (21, 23) zumindest ein Teil (15b) der vom Sender (11) ausgesandten Strahlung (15) in einer von der Lage der Erfassungseinrichtung im Raum und/oder von der Stellung der Verstelleinrichtung (19) abhängigen Weise beeinflusst wird.

28. Verfahren nach einem der Ansprüche 20 bis 27,
**dadurch gekennzeichnet,**
**dass** die Richtung der ausgesandten Strahlung (15) zusätzlich in einer von der Sollrichtung (21, 23) unabhängigen Weise verändert und insbesondere die ausgesandte Strahlung (15) zu einer in einer Abtastebene (41) verlaufenden Abtastbewegung veranlasst wird, wobei vorzugsweise die Korrektur der Richtung der ausgesandten Strahlung (15) zur Durchführung einer Mehrebenen-Abtastung verwendet wird, indem nacheinander unterschiedliche, jeweils der Lage einer der Abtastebenen im Raum entsprechende Sollrichtungen vorgegeben werden.

29. Verfahren nach einem der Ansprüche 20 bis 28,
**dadurch gekennzeichnet,**
**dass** die oder jede Sollrichtung (21, 23) eingelernt wird.

30. Verwendung einer Vorrichtung nach einem der Ansprüche 1 bis 19 und/oder eines Verfahrens nach einem der Ansprüche 20 bis 29 zur Überwachung der Umgebung eines insbesondere autonomen Fahrzeugs, mit dem die Erfassungseinrichtung fest verbunden ist.

31. Verwendung nach Anspruch 30,
**dadurch gekennzeichnet,**
**dass** bei automatischer Selbstausrichtung der ausgesandten Strahlung (15) im Raum die Sollrichtung (21) zumindest näherungsweise in einer Horizontalebene (53) liegt.

## Claims

1. An optical detection device, in particular a laser scanner, comprising at least one transmitter (11) for the transmission of electromagnetic radiation into a monitored zone;
at least one receiver (13) for radiation reflected in the monitored zone;
an optical discovery device (17) provided in addition to the transmitter (11) and to the receiver (13) with which a deviation of the direction of the transmitted radiation (15) from a presettable desired direction (21, 23) caused by a change in the location of the detection device in space can be measured using optical means; and
an optical adjustment device (19) with which the direction of the transmitted radiation (15) relative to the detection device can be corrected using optical means in dependence on a measured deviation,
wherein the adjustment device (19) includes an optical assembly having a plurality of optical elements (35, 25) which can be moved relative to one another for the change in direction of the transmitted radiation (15).

2. A detection device in accordance with claim 1, **characterised in that** the optical assembly includes a movable correction lens (35).

3. A detection device in accordance with claim 2, **characterised in that** the correction lens (35) is movable with a component perpendicular to the optical axis of the radiation (15) transmitted by the transmitter.

4. A detection device in accordance with any one of the preceding claims, **characterised in that** the optical means for the measurement of the deviation and the optical means for the correction of the direction of the transmitted radiation (15) only include elements of the detection device and are in particular forced to make a joint movement with the detection device in space.

5. A detection device in accordance with any one of the preceding claims, **characterised in that** a closed loop with the direction of the transmitted radiation (15) as a control variable and with the desired direction (21, 23) as a command variable is realized by the optical discovery device (17) and the optical adjustment device (19).

6. A detection device in accordance with any one of the preceding claims, **characterised in that** the position of the desired direction (21, 23) is preset relative to a reference system (B_{R}) fixed in space or relative to a reference system (B_{E}) fixedly connected to the detection device.

7. A detection device in accordance with any one of the preceding claims, **characterised in that** the discovery device (17) and the adjustment device (19) are elements of a total optical system for the radiation (15) transmitted by the transmitter (11).

8. A detection device in accordance with any one of the preceding claims, **characterised in that** a common beam splitter (25) is associated with the discovery device (17) and with the adjustment device (19) with which the radiation (15) transmitted by the transmitter (11) can be split into a detection portion (15a) provided for the transmission into the monitored zone and into a correction portion (15b) for the discovery device (17).

9. A detection device in accordance with any one of the preceding claims, **characterised in that** the discovery device (17) includes an optically effective reference unit (27) having a beam influencing device (29) which influences at least a portion (15b) of the radiation (15) transmitted by the transmitter (11) in a manner dependent on the location of the detection device in space and/or on the position of the adjustment device (19).

10. A detection device in accordance with claim 9, **characterised in that** the reference unit (27) is an element of the detection device and is in particular forced to make a joint movement with the detection device in space.

11. A detection device in accordance with claim 9 or claim 10, **characterised in that** the location of the beam influencing device (29) is constant in space and is in particular independent of the location of the detection device in space.

12. A detection device in accordance with any one of the claims 9 to 11, **characterised in that** the location of the beam influencing device (29) is kept constant while utilizing gravity.

13. A detection device in accordance with any one of the claims 9 to 12, **characterised in that** the beam influencing device includes a reflection surface (29).

14. A detection device in accordance with claim 13, **characterised in that** the reflection surface (29) is made to align itself automatically in accordance with a preset location in space.

15. A detection device in accordance with claim 13 or claim 14, **characterised in that** the reflection surface is formed by the boundary layer (29) of two non-miscible liquids.

16. A detection device in accordance with any one of the preceding claims, **characterised in that** the discovery device (17) includes a spatially resolving detector (31) having an optical imaging system (33) positioned before it with which both a portion (15b1) of the radiation (15b) propagating in the direction of the beam influencing device (29) uninfluenced by the beam influencing device (29) and a portion (15b2) thereof influenced by the beam influencing device (29) can be imaged on the detector (31).

17. A detection device in accordance with any one of the claims 8 to 16, **characterised in that** the adjustment device (19) is arranged in front of the beam splitter (25) viewed in the direction of propagation of the radiation.

18. A detection device in accordance with any one of the preceding claims, **characterised in that** the adjustment device (19) is provided in addition to an optical emergence system (37, 39) which changes the direction of the transmitted radiation (16) in a manner independent of the desired direction (21, 23) and in particular includes a rotating deflection device (39) for the realisation of a scan function.

19. A detection device in accordance with claim 18, **characterised in that** the deflection device (39) deflects the transmitted radiation (15) within a scan plane (41) for the realisation of a scan function, with the deflection device (39) preferably including a penta prism.

20. A method for the correction of the direction of the transmitted radiation (15) of an optical detection device, in particular of a laser scanner, which includes at least one transmitter (11) for the transmission of electromagnetic radiation into a monitored zone and at least one receiver (13) for radiation reflected in the monitored zone, wherein
a deviation of the direction of the transmitted radiation (15) from a presettable desired direction (21, 23) caused by a change in the location of the detection device in space is measured using optical means by means of an optical discovery device (17) provided in addition to the transmitter (11) and to the receiver (13); and
the direction of the transmitted radiation (15) relative to the detection device is corrected using optical means in dependence on the measured deviation in that a plurality of optical elements (35, 25) which form an optical assembly are moved relatively to one another.

21. A method in accordance with claim 20, **characterised in that** the direction of the transmitted radiation (15) is compared with the desired direction (21, 23) continuously and in particular also with a detection device moving in space and is corrected where necessary.

22. A method in accordance with claim 20 or claim 21, **characterised in that** the transmission of the radiation is regulated with the direction of the transmitted radiation (15) as a control variable and with the desired direction (21, 23) as a command variable.

23. A method in accordance with any one of the claims 20 to 22, **characterised in that** the desired direction (21, 23) is preset selectively relative to a reference system (B_{R}) fixed in space or relative to a reference system (B_{E}) fixedly connected to the detection device.

24. A method in accordance with any one of the claims 20 to 23, **characterised in that** the location of the desired direction (21) is constant in space and the correction of the direction of the transmitted radiation (15) takes place with a detection device moving in space in the sense of an automatic self-alignment of the transmitted radiation (15).

25. A method in accordance with any one of the claims 20 to 24, **characterised in that** the location of the desired direction (23) relative to the detection device is changed in accordance with a presettable time scheme and the correction of the direction of the transmitted radiation (15) takes place with a detection device moving in space or stationary in the sense of a multi-zone or multiplane scanning of the monitored zone.

26. A method in accordance with any one of the claims 20 to 25, **characterised in that** the correction of the direction of the transmitted radiation (15) takes place only using such elements of the detection device which are forced to make a joint movement with the detection device in space.

27. A method in accordance with any one of the claims 20 to 26, **characterised in that** at least a portion (15b) of the radiation (15) transmitted by the transmitter (15) is influenced in a manner dependent on the location of the detection device in space and/or on the position of the adjustment device (19) for the measurement of the deviation of the direction of the transmitted radiation (15) from the desired direction (21, 23).

28. A method in accordance with any one of the claims 20 to 27, **characterised in that** the direction of the transmitted radiation (15) is additionally changed in a manner independent of the desired direction (21, 23) and in particular the transmitted radiation (15) is caused to make a scanning movement extending in a scanning plane (41), with preferably the correction of the direction of the transmitted radiation (15) being used for the carrying out of a multiplane scanning **in that** different desired directions each corresponding to the location of one of the scanning planes in space are preset after one another.

29. A method in accordance with any one of the claims 20 to 28, **characterised in that** the or each desired direction (21, 23) is taught.

30. Use of an apparatus in accordance with any one of the claims 1 to 19 and/or of a method in accordance with any one of the claims 20 to 29 for the monitoring of the environment of an in particular autonomous vehicle to which the detection device is fixedly connected.

31. Use in accordance with claim 30, **characterised in that** the desired direction (21) is at least approximately in a horizontal plane (53) on an automatic self-alignment of the transmitted radiation (15) in space.

## Revendications

1. Dispositif de détection optique, en particulier scanneur à laser, comprenant au moins un émetteur (11) pour émettre un rayonnement électromagnétique dans une zone de surveillance,
au moins un récepteur (13) pour le rayonnement réfléchi dans la zone de surveillance,
un dispositif de constatation optique (17), prévu en supplément à l'émetteur (11) et au récepteur (13), au moyen duquel un écart de la direction du rayonnement émis (15) par rapport à une direction de consigne prédéterminée (21, 23) et provoqué par une modification de la position du dispositif de détection est mesurable avec des moyens optiques, et
un dispositif de réglage optique (19) au moyen duquel la direction du rayonnement émis (15) par rapport au dispositif de détection est susceptible d'être corrigée en fonction d'un écart mesuré avec des moyens optiques,
dans lequel le dispositif de réglage (19) comprend un groupe structurel optique avec une pluralité d'éléments optiques (35, 25) qui sont déplaçables les uns par rapport aux autres pour modifier la direction du rayonnement émis (15).

2. Dispositif de détection selon la revendication 1,
**caractérisé en ce que** le groupe structurel optique comprend une lentille de correction déplaçable (35).

3. Dispositif de détection selon la revendication 2,
**caractérisé en ce que** la lentille de correction (35) est déplaçable avec une composante perpendiculaire à l'axe optique du rayonnement (15) émis par l'émetteur.

4. Dispositif de détection selon l'une des revendications précédentes,
**caractérisé en ce que** les moyens optiques pour la mesure de l'écart et les moyens optiques pour la correction de la direction du rayonnement émis (15) comprennent exclusivement des éléments constitutifs du dispositif de détection, et sont en particulier forcés à un déplacement commun avec le dispositif de détection dans l'espace.

5. Dispositif de détection selon l'une des revendications précédentes,
**caractérisé en ce qu'**au moyen du dispositif de constatation optique (17) et du dispositif de réglage optique (19) il est réalisé un circuit de régulation avec la direction du rayonnement émis (15) en guise de grandeur régulée et la direction de consigne (21, 23) en guise de grandeur guide.

6. Dispositif de détection selon l'une des revendications précédentes,
**caractérisé en ce que** la position de la direction de consigne (21, 23) par rapport à un système de référence (B_{R}) fixe dans l'espace ou par rapport à un système de référence (B_{E}) relié fermement au dispositif de détection est prédéterminée.

7. Dispositif de détection selon l'une des revendications précédentes,
**caractérisé en ce que** le dispositif de constatation (17) et le dispositif de réglage (19) sont des éléments constitutifs d'un système optique global pour le rayonnement (15) émis par l'émetteur (11).

8. Dispositif de détection selon l'une des revendications précédentes,
**caractérisé en ce qu'**un diviseur de rayonnement commun (25) est associé au dispositif de constatation (17) et au dispositif de réglage (19), au moyen duquel le rayonnement (15) émis par l'émetteur (11) peut être subdivisé en une part de détection (15a) prévue pour être émise dans la zone de surveillance et une part de correction (15b) pour le dispositif de constatation (17).

9. Dispositif de détection selon l'une des revendications précédentes,
**caractérisé en ce que** le dispositif de constatation (17) comprend une unité de référence (27) active sur le plan optique avec un moyen pour influencer le rayonnement (29), qui influence au moins une partie (15b) du rayonnement (15) émis par l'émetteur (11) d'une manière qui dépend de la position du dispositif de détection dans l'espace et/ou de la situation du dispositif de réglage (19).

10. Dispositif de détection selon la revendication 9,
**caractérisé en ce que** l'unité de référence (27) est un élément constitutif du dispositif de détection et est en particulier forcée à un mouvement commun avec le dispositif de détection dans l'espace.

11. Dispositif de détection selon la revendication 9 ou 10,
**caractérisé en ce que** la position du dispositif pour influencer le rayonnement (29) dans l'espace est constante, et est en particulier indépendante de la position du dispositif de détection dans l'espace.

12. Dispositif de détection selon l'une des revendications 9 à 11,
**caractérisé en ce que** la position du dispositif pour influencer le rayonnement (29) est maintenue constante en exploitant la force de gravité.

13. Dispositif de détection selon l'une des revendications 9 à 12,
**caractérisé en ce que** le dispositif pour influencer le rayonnement comprend une surface de réflexion (29).

14. Dispositif de détection selon la revendication 13,
**caractérisé en ce que** la surface de réflexion (29) est réalisée de manière à s'orienter d'elle-même en correspondance d'une position prédéterminée dans l'espace.

15. Dispositif de détection selon la revendication 13 ou 14,
**caractérisé en ce que** la surface de réflexion est formée par la couche limite (29) de deux liquides non miscibles.

16. Dispositif de détection selon l'une des revendications précédentes,
**caractérisé en ce que** le dispositif de constatation (17) comprend un détecteur à résolution locale (31) avec une optique d'imagerie (33) qui le précède, au moyen de laquelle il est possible de faire sur le détecteur (31) l'image aussi bien d'une part (15b1) qui n'est pas influencée par le dispositif pour influencer le rayonnement (29) que d'une part (15b2) influencée par le dispositif pour influencer le rayonnement (29), du rayonnement (4b) qui se propage en direction du dispositif pour influencer le rayonnement (29).

17. Dispositif de détection selon l'une des revendications 8 à 16,
**caractérisé en ce que** le dispositif de réglage (19) est agencé devant le diviseur de rayonnement (25), vu dans la direction de propagation du rayonnement.

18. Dispositif de détection selon l'une des revendications précédentes,
**caractérisé en ce que** le dispositif de réglage (19) est prévu en supplément à une optique de sortie (37, 39) qui modifie la direction du rayonnement émis (15) d'une manière indépendante de la direction de consigne (21, 23), et qui comprend en particulier un moyen de déflexion rotatif (39) pour réaliser une fonction de balayage.

19. Dispositif de détection selon la revendication 18,
**caractérisé en ce que** le moyen de déflexion (39) dévie le rayonnement émis (15) à l'intérieur d'un plan de palpage (41) pour réaliser une fonction de balayage, et de préférence le moyen de déflexion (39) comprend un prisme "penta".

20. Procédé pour corriger la direction du rayonnement émis (15) d'un dispositif de détection optique, en particulier d'un scanneur à laser qui comprend au moins un émetteur (11) pour émettre un rayonnement électromagnétique dans une zone de surveillance et au moins un récepteur (13) pour le rayonnement réfléchi dans la zone de surveillance, dans lequel
au moyen d'un dispositif de constatation optique (17) prévu en supplément à l'émetteur (11) et au récepteur (13), on mesure avec des moyens optiques un écart de la direction du rayonnement émis (15) depuis une direction de consigne prédéterminée (21, 23), provoqué par une modification de la position du dispositif de détection dans l'espace, et
en fonction de l'écart mesuré, on corrige la direction du rayonnement émis (15) par rapport au dispositif de détection avec des moyens optiques, en ce que l'on déplace une pluralité d'éléments optiques (35, 25), qui forment un groupe structurel optique, les uns par rapport aux autres.

21. Procédé selon la revendication 20,
**caractérisé en ce que** la direction du rayonnement émis (15) est comparée en continu avec la direction de consigne (21, 23), et en particulier également lorsque le dispositif de détection se déplace dans l'espace, et si nécessaire on la corrige.

22. Procédé selon la revendication 20 ou 21,
**caractérisé en ce que** l'émission du rayonnement est régulée avec la direction du rayonnement émis (15) en guise de grandeur de régulation, et avec la direction de consigne (21, 23) en guise de grandeur guide.

23. Procédé selon l'une des revendications 20 à 22,
**caractérisé en ce que** la direction de consigne (21, 23) est prédéterminée au choix par rapport à un système de référence (B_{R}) fixe dans l'espace ou par rapport à un système de référence (B_{E}) relié fermement au dispositif de détection.

24. Procédé selon l'une des revendications 20 à 23,
**caractérisé en ce que** la position de la direction de consigne (21) dans l'espace est constante, et la correction de la direction du rayonnement émis (15), lorsque le dispositif de détection se déplace dans l'espace, a lieu dans le sens d'une auto-orientation automatique du rayonnement émis (15).

25. Procédé selon l'une des revendications 20 à 24,
**caractérisé en ce que** la position de la direction de consigne (23) par rapport au dispositif de détection est modifiée selon un schéma temporel prédéterminé, et la correction de la direction du rayonnement émis (15), lorsque le dispositif de détection se déplace dans l'espace ou est immobile, a lieu dans le sens d'un palpage à zones multiples ou à plans multiples de la zone de surveillance.

26. Procédé selon l'une des revendications 20 à 25,
**caractérisé en ce que** la correction de la direction du rayonnement émis (15) a lieu exclusivement avec ceux des éléments constitutifs du dispositif de détection qui sont forcés à un déplacement conjoint avec le dispositif de détection dans l'espace.

27. Procédé selon l'une des revendications 20 à 26,
**caractérisé en ce que**, pour la mesure de l'écart de la direction du rayonnement émis (15) par rapport à la direction de consigne (21, 23), au moins une partie (15b) du rayonnement (15) émis par l'émetteur (11) et influencée d'une manière qui dépend de la position du dispositif de détection dans l'espace et/ou de la situation du dispositif de réglage (19).

28. Procédé selon l'une des revendications 20 à 27,
**caractérisé en ce que** la direction du rayonnement émis (15) est modifiée en supplément d'une manière qui dépend de la direction de consigne (21, 23), et en particulier le rayonnement émis (15) est amené à exécuter un mouvement de palpage qui s'étend dans un plan de palpage (41), et de préférence la correction de la direction du rayonnement émis (15) est utilisée pour exécuter un palpage à plans multiples, **en ce que** l'on prédétermine les unes après les autres des directions de consigne différentes qui correspondent respectivement à la position de l'un des plans de palpage dans l'espace.

29. Procédé selon l'une des revendications 20 à 28,
**caractérisé en ce que** la direction de consigne (21, 23) ou chaque direction de consigne (21, 23) fait l'objet d'un apprentissage.

30. Utilisation d'un dispositif selon l'une des revendications 1 à 19 et/ou d'un procédé selon l'une des revendications 20 à 29 pour la surveillance de l'environnement d'un véhicule, en particulier autonome, avec lequel le dispositif de détection est fermement relié.

31. Utilisation selon la revendication 30,
**caractérisée en ce que** lors d'une auto-orientation automatique du rayonnement émis (15) dans l'espace, la direction de consigne (21) se trouve au moins approximativement dans un plan horizontal (53).
